# EUROPÄISCHE PATENTSCHRIFT

(11) **EP 1 506 267 B1**
(45) Veröffentlichungstag und Bekanntmachung des Hinweises auf die Patenterteilung: **16.01.2008**
(21) Anmeldenummer: 03749858.1
(22) Anmeldetag: 25.04.2003
(51) Int. Cl.: C09J 7/02, C09J 5/08, C08J 9/22, C08J 9/00

(54) **GESCHÄUMTE HAFTKLEBEMASSEN**
FOAMED CONTACT ADHESIVES
ADHESIFS DE CONTACT MOUSSES

(30) Priorität: 11.05.2002 DE 10221092
(43) Veröffentlichungstag der Anmeldung: 16.02.2005
(73) Patentinhaber: tesa AG, 20253 Hamburg (DE)
(72) Erfinder: ZÖLLNER, Stephan, 21244 Buchholz/Nordheide (DE); HUSEMANN, Marc, 22605 Hamburg (DE)
(86) Internationale Anmeldenummer: PCT/EP2003/004319
(87) Internationale Veröffentlichungsnummer: WO 2003/095576

(56) Entgegenhaltungen:
- EP-A- 0 596 418
- WO-A-97/43993
- US-A- 5 709 948
- DATABASE WPI Section Ch, Week 198615 Derwent Publications Ltd., London, GB; Class A13, AN 1986-096581 XP002251771 -& JP 61 040146 A (SEKISUI PLASTICS CO LTD), 26. Februar 1986 (1986-02-26)

## Beschreibung

Für Haftklebeschäume existieren eine Vielzahl von Anwendungen. So finden Haftklebebänder auf Basis von Haftklebeschäumen Anwendung in Automobilen, Schiffen, Flugzeugen, im Häuserbau, im elektrischen Bereich sowie zur Verbindung von mechanischen Teilen.

Ein Vorteil derartiger Haftklebebänder ist die hohe Klebkraft bei gleichzeitig hoher innerer Kohäsion. Zudem können diese Haftklebebandtypen sehr gut Unebenheiten auf den zu verklebenden Substraten ausgleichen. Da diese Haftklebebänder sehr häufig im industriellen Bereich eingesetzt werden, werden in vielen Fällen Acrylatschäume eingesetzt, da diese für viele Zwecke erwünschte oder erforderliche spezifische Vorteile, wie beispielsweise Alterungsbeständigkeit und hohe innere Kohäsion, auch bei hohen Temperaturen aufweisen.

Eine Methode zur Herstellung solcher Schäume ist die Zugabe von sogenannten "Microbubbles" zu den Monomeren oder einem Präpolymerisat; nach der Zugabe findet die Polymersation und/oder eine Vernetzung statt. Diese Methode wird z. B. in den Schriften US 4,726,982, US 5,308,887, US 5,658,630 und JP 17030/1982 beschrieben. Hierbei werden zu Haftklebemassen "Microbubbles" mit einem Volumenanteil von bis zu 60 % zugesetzt und auf diese Weise Schäume erzeugt.

Neben klaren "Microbubbles" lassen sich auch gefärbte Varianten einsetzen. In JP 272251/1986 und 237176/1991 werden solche Varianten beschrieben, wobei hier wiederum durch UV-Licht die Polymerisation der Monomere gestartet wird.

Neben "Microbubbles" lässt sich auch Glasstaub als Zusatz verwenden (JP 49415/1994).

Die oben beschriebenen Methoden sind ein einfaches Verfahren zur Herstellung von Schäumen, aber durch den Zusatz der "Microbubbles" verändern sich die Eigenschaften gegenüber konventionellen Schäumen. Zudem sind diese "Microbubbles" ebenfalls kostenaufwendiger als z.B. Luft als Aufschäumhilfe.

Neben den oben beschriebenen Methoden existieren andere Möglichkeiten, Luftblasen in die Haftklebemassen zu inkorperieren. In der JP 58369/1983 werden z. B. Aufschäumreagenzien auf Harnstoffbasis eingesetzt. Die Haftklebemasse liegt hier als wässrige Dispersion vor, und die Aufschäumung wird in diesem Fall thermisch initiiert.

In der JP 89585/1988 wird eine Dispersion durch starkes Rühren aufgeschäumt. In diesem Sinne wird in der JP 45184/992 die Herstellung von offenen Zellen im Schaum durch starkes Rühren von Acrylatdispersionen beschrieben sowie die Herstellung von geschlossenen Zellen durch die Reaktion mit einem Aufschäumreagenz durch den thermischen Trocknungsprozess.

In der JP 186744/1993 werden eine Acrylatdispersion und eine Urethandispersion zum Aufschäumen vermischt.

In der JP 304170/1989 werden Acrylatmonomere, Epoxy-Harze und Acrylatharze in Emulsion aufgeschäumt und dann thermisch getrocknet.

In der JP 201320/1989 werden niedermolekulare Acrylatcopolymere mit multifunktionellen Polyisocyanaten umgesetzt unter Bedingungen, dass leichtflüchtige Bestandteile entstehen, die einen Aufschäumprozess initiieren.

In den vorangegangenen Schriften werden in einer Vielzahl Aufschäumverbindungen hinzugesetzt, die durch thermische Reaktion leichtflüchtige Bestandteile freisetzen und somit die Aufschäumung des Haftklebebandes verursachen. Dieses Prinzip lässt sich sehr gut für Beschichtungen aus Dispersionen oder aus Lösung anwenden. Für die Beschichtung aus der Schmelze sind die oben beschriebenen Verfahren aber nicht geeignet, da der Schaum ansonsten bereits während der Hotmeftverarbeitung entstehen würde. Hotmelt-Verfahren sind aus ökonomischen und ökologischen Gründen als Polymerisations- und Verarbeitungsprozesse zu bevorzugen, da der Anteil an Lösemittel deutlich reduziert wird und zudem hohe Prozessgeschwindigkeiten realisiert werden können.

In der US 5,753,362 werden dagegen einige Methoden zur Herstellung von Luftblasen innerhalb von Schäumen beschrieben. Aber bei derartigen Verfahren tritt häufig ein Problem in der Polymermatrix auf, da die durch Luftblasen erzeugten Schäume dazu neigen, wieder zusammenzufallen. Daher wird als Polymermatrix z.B. PMMA verwendet. Dieses Material besitzt aber eine sehr hohe Glasübergangstemperatur und weist keine haftklebenden Eigenschaften auf.

Als Füllmaterialien für Haftklebeschäume können Glashohlkugeln eingesetzt werden, solche Verfahren sind beispielsweise in den Schriften JP 49766/1983, JP 64682/1984 und 90028/1995 beschrieben.

In der WO 95/01408 werden spezifische Elastomere auf Basis von Blockcopolymere hergestellt. Hierbei können jedoch nur Elastomere eingesetzt werden. Für viskoelastische Haftklebemassen ist dieses Verfahren nicht geeignet, da die Haftklebemasse nach dem Aufschäumprozess zusammenfließen würde und nicht stabil ist.

In der EP 0 901 357 werden partiell selbstklebend beschichtete Trägermaterialien sowie ein Verfahren zu deren Herstellung beschrieben. In diesem Verfahren werden Haftklebemassen in der Schmelze mit Gasen oder Luft aufgeschäumt und dann beschichtet. Dieses Verfahren weist aber den Nachteil auf, dass insbesondere Polyacrylatschäume durch das Fließverhalten wieder in sich zusammensinken. Das Verfahren eignet sich somit nicht für sehr fließfähige Systeme, die besonders bevorzugt durch Hotmelt-Verfahren beschichtet werden.

Aufgabe der Erfindung ist es daher, ein Verfahren zur Verfügung zu stellen, welches es erlaubt, Haftklebemassenschäume zu stabilisieren, ohne dabei die Nachteile des Standes der Technik aufzuweisen. Insbesondere soll vermieden werden, dass die Haftktebemassenschäume bei der Stabilisierung stark schrumpfen, sich wieder verdichten oder in sich zusammenfallen.

Gelöst wird diese Aufgabe durch ein Verfahren, wie es in den Ansprüchen näher dargelegt wird. So wurde überraschend und für den Fachmann unvorhersehbar gefunden, dass die Schäume nicht in sich zusammensinken und vielmehr ihre Schaumstruktur beibehalten, wenn der Schaum bei einer Vernetzung durch actinische Strahlung über eine gekühlte Walze läuft, insbesondere dann, wenn sich zwischen der Walze und dem Schaum ein Kontaktmedium befindet.

Entsprechend betrifft der Anspruch 1 ein Verfahren zur Herstellung einer Haftklebemasse, bei welchem zunächst eine Schmelzhaftklebemasse nach einem an sich bekannten Verfahren hergestellt wird, bei welchem weiterhin die Schmelzhaftklebemasse geschäumt wird, der geschäumte Schmelzhaftkleber auf eine kühlbare Walze (Kühlwalze) aufgelegt wird und auf der kühlbaren Walze durch Bestrahlung mit actinischer Strahlung vernetzt wird.
Die Schäumung kann dabei ebenfalls nach einem an sich bekannten Verfahren durchgeführt werden.

Das Auflegen des geschäumten Schmelzhaftklebers auf die Walze kann dabei in einer oder in mehreren Lagen geschehen.

In einer bevorzugten Ausführungsform wird der vernetzte Haftklebeschaum auf ein Trägermaterial und/oder eine weitere Haftklebeschicht transferiert.

Vorteilhaft wird die Schmelzhaftklebemasse durch Bestrahlung mit Elektronenstrahlung oder mit UV-Strahlung vernetzt.
Typische Bestrahlungsvorrichtungen für die Vernetzung mittels Elektronenstrahlung werden durch Linearkathodensysteme, Scannersysteme oder Segmentkathodensysteme gegeben, sofern es sich dabei um Elektronenstrahlbeschleuniger handelt. Eine ausführliche Beschreibung des Standes der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991.
Die Beschleunigungsspannungen liegen vorteilhaft im Bereich zwischen 40 kV und 500 kV, vorzugsweise zwischen 80 kV und 300 kV. Die angewandten Strahlungsdosen bewegen sich zwischen 5 und 150 kGy, insbesondere zwischen 20 und 100 kGy.
Alternativ oder zusätzlich kann die Vernetzung mittels UV-Strahlung, besonders mittels kurzzeitiger ultravioletter Bestrahlung in einem Wellenlängenbereich von 200 bis 450 nm, insbesondere unter Verwendung von Quecksilber-Hochdruck- oder -Mitteldruck-Lampen bei einer Leistung von 80 bis 240 W/cm durchgeführt werden. Zur UV-Vernetzung kann aber auch monochromatische Strahlung in Form von Laserlicht verwendet werden. Um Überhitzungen zu vermeiden, kann es angebracht sein, den UV-Strahlengang teilweise abzuschatten. Weiterhin können spezielle Reflektoren-Syteme eingesetzt werden, die als Kaltlichtstrahler fungieren, um somit Überhitzungen zu vermeiden.

Bei Bestrahlung unter Einsatz einer Kühlwalze können die zur Vernetzung erforderlichen Strahlendosen bedeutend höher gewählt werden als bei konventionellen Vernetzungsmethoden.

In einer bevorzugten Ausführungsform wird die Walze während der Bestrahlung der Schmelzhaftklebemasse aktiv gekühlt. Insbesondere ist es vorteilhaft, wenn die Temperatur der Walze während der Bestrahlung nicht mehr als 25 °C beträgt.
Hierzu ist es günstig, wenn die Walze aktiv gekühlt wird.

Als Kühlwalze dient gewöhnlich eine geerdete Metallwalze, die die im Falle der Vernetzung durch Elektronenstrahlung auftreffenden Elektronen und die dabei entstehende Röntgenstrahlung absorbiert. Sie muss mit einem wirksamen Kühlsystem ausgerüstet sein, um die erheblichen Wärmemengen wegzutransportieren. Zur Verhinderung der Korrosion ist diese Walze gewöhnlich mit einer Schutzschicht überzogen. Diese wird bevorzugt so ausgewählt, dass sie von dem Kontaktmedium gut benetzt wird. Im allgemeinen ist die Oberfläche elektrisch und/oder thermisch leitfähig. Es kann aber auch günstiger sein, die Walze mit einer oder mehreren Schichten aus isolierendem oder halbleitendem Material zu beschichten. Zudem sollte die Kühlfunktion sehr ausgeprägt sein, um den Haftklebeschaum zu stabilisieren. Daher wird in einer bevorzugten Verfahrensweise auf Temperaturen unterhalb 25 °C, in einer sehr bevorzugten Verfahrensweise auf Temperaturen unterhalb 5 °C heruntergekühlt.

Die Kühlwalze kann makroskopisch glatt sein oder auch eine gering strukturierte Oberfläche aufweisen. Es hat sich bewährt, wenn eine Oberflächenstruktur vorhanden ist, insbesondere eine Aufrauung der Oberfläche. Hierdurch wird eine Benetzung der Oberfläche erleichtert

Weiterhin ist es sehr vorteilhaft, wenn sich während der Bestrahlung der Schmelzhaftklebemasse zwischen dieser und der Walze ein Kontaktmedium befindet. Das Kontaktmedium kann auf die Rückseite des Haftklebeschaumes und/oder auf die Walze aufgetragen werden, es ist alternativ oder zusätzlich möglich, das Kontaktmedium berührungslos aufzubringen, zum Beispiel durch Aufsprühen.

Als Kontaktmedium kann dabei ein Material verwendet werden, welches in der Lage ist, einen Kontakt zwischen der Haftklebemasse und der Walzenoberfläche herzustellen; insbesondere ein Material, welches die Hohlräume zwischen der Haftklebemasse und der Walzenoberfläche (beispielsweise Unebenheiten in der Walzenoberfläche, Blasen) ausfüllt.

Gegebenenfalls kann sich zusätzlich noch ein Trägermaterial zwischen der Haftklebemasse und der Walzenoberfläche befinden oder zum Beispiel durch Coextrusion mit in das System eingebracht werden. Das Trägermaterial sollte dann allerdings bevorzugt eine sehr gute thermische Leitfähigkeit besitzen, damit genügend Wärme aus den geschäumten Hotmelt durch das Trägermaterial auf die Walze abgezogen werden kann.

Vorteilhaft lassen sich fließfähige Materialien als Kontaktmedium einsetzen, welche in einem weiten Viskositätsbereich verwendet werden können. So kann das Kontaktmedium beispielsweise selbst aus einer Haftklebemasse oder auch aus einem anderen Material bestehen, welches auf die Walze und/oder auf die Unterseite der aufliegenden geschäumten Haftklebemassenschicht auffließt und die Luft zwischen der geschäumten Haftklebemassenschicht und der Walze verdrängt.
Weiterhin können weiche, "anschmiegsame" Materialien als Kontaktmedium verwendet werden. Zum einen können in bevorzugter Weise weichelastische Materialien eingesetzt werden, wie beispielsweise Weichgummi, Weich-PVC, andere Weichkunststoffe und ähnliche Materialien. Wenn diese fest mit der Kühlwalze verbunden sind, müssen sie über ausreichende Strahlenbeständigkeit verfügen sowie eine ausreichende thermische und elektrische Leitfähigkeit aufweisen.
Besonders vorteilhaft ist, das Kontaktmedium nicht permanent auf der Walze zu belassen, sondern vor dem Bestrahlungsprozess auf die Walze aufzubringen und nach dem Bestrahlungsprozess von dieser wieder zu entfernen. In einer weiteren günstigen Ausführungsform liegt das Kontaktmedium in Form eines austauschbaren Überzuges auf der Walze vor. Der Wechsel des Kontaktmediums kann während des Bestrahlungsprozesses (kontinuierlicher Wechsel) oder zwischen den einzelnen Bestrahlungsprozessen (diskontinuierlicher Wechsel) erfolgen. Durch den ständigen Austausch wird vermieden, dass das Kontaktmedium durch die laufende Bestrahlung so stark beeinträchtigt wird, dass es seine Funktion verliert.

Vorteilhaft wird als Kontaktmedium eine Flüssigkeit verwendet, die gegebenenfalls Additive für zusätzliche Funktionen erhält. Dazu gehören die Erhöhung der Benetzung und der elektrischen Leitfähigkeit sowie das Abfangen von Radikalen und anderen reaktiven Spezies, die von der absorbierten Strahlung erzeugt werden.

Als Kontaktflüssigkeit kann vorteilhaft Wasser eingesetzt werden, welches die erforderlichen Aufgaben erfüllt. In einer weiteren Variante werden dem Kontaktmedium Substanzen zugesetzt, die darin zumindest teilweise löslich sind. Für Wasser als Kontaktmedium bieten sich als Zusätze beispielsweise Alkylalkoholate wie Ethanol, Propanol, Butanol, Hexanol an. Weiterhin sehr vorteilhaft sind insbesondere längerkettige Alkohole, Polyglykole, Ketone, Amine, Carboxylate, Sulfonate und dergleichen.

Günstige Kontaktmedien besitzen eine niedrige Oberflächenspannung. Eine Absenkung der Oberflächenspannung kann durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. ß-Di(hydroxyalkyl)sulfoniumsalz), weiterhin beispielsweise ethoxylierte Nonylphenyl-sulfonsäureammoniumsalze. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden.
Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Kühlwalze einen Film dieses Kontaktmediums aufträgt bzw. aufstreicht.

Erfindungsgemäß lassen sich mit dem hier vorgestellten Verfahren sehr vorteilhaft solche Haftklebemassen auf Acrylat-, Naturkautschuk-, Synthesekautschuk- und/oder EVA-Basis herstellen und stabilisieren. Das Verfahren ist prinzipiell auch zur Herstellung für die weiteren, dem Fachmann bekannten strahlenvernetzbaren Haftklebemassen anwendbar, besonders für solche, wie sie z.B. im ,,Handbook of Pressure Sensitive Adhesive Technology" von Donatas Satas (van Nostrand, New York 1989) aufgeführt sind.

Die geschäumten Haftklebemassen können bevorzugt solche auf Acrylatbasis sein. Dabei kann vorteilhaft von einer Monomerzusammensetzung ausgegangen werden, welche zu 70 bis 100 Gew.-%
a1) Acrylsäureester und/oder Methacrylsäureester und/oder deren freie Säuren mit der folgenden allgemeinen Formel

   CH₂=CH(R₁)(COOR₂)

   mit R₁ = H oder CH₃ und R₂ = H oder eine Alkylkette mit 1 bis 30 C-Atomen enthält, wobei weiterhin zu 0 bis 30 Gew.-%
a2) olefinisch ungesättigte Monomere mit funktionellen Gruppen
   vorhanden sein können, und wobei sich die Gruppen a1) und a2) entweder zu 100 Gew.-% addieren oder zu einem Wert kleiner 100 %, wobei die Monomermischung in letzterem Falle noch weitere Monomere aufweist.

In günstiger Vorgehensweise können im Sinne einer weiteren Komponente a3) bis zu 20 Gew.-%, bevorzugt von 0,5 bis 5 Gew.-%, jeweils bezogen auf die Monomerzusammensetzung, Polystyrolverbindungen zugesetzt werden, welche terminal mit zumindest einer Acrylat und/oder Methacrylatgruppe funktionalisiert sind, etwa im Sinne der in Analogie zur US 4,551,388 genannten Moleküle des allgemeinen Typs 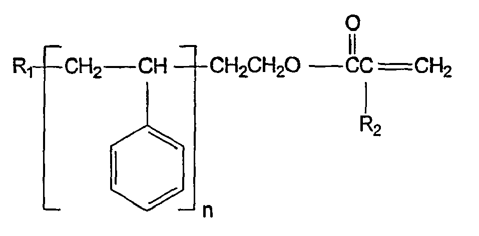 wobei R₂ = H oder CH₃ ist. R₁ ist ein vom Polymerisationsinitiator verbleibender Rest, bevorzugt beispielsweise

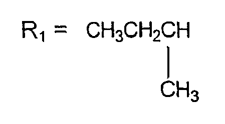

Derartige Makromonomere werden beispielsweise unter dem Handelsnamen Chemlink® 4500 (Sartomer) [R₁ = CH₃CH₂CH(CH₃); R₂ = CH₃] oder Methacromer® PS12 (Polymer Chemistry Innovations) [R₁ ohne nähere Spezifikation, R₂ = CH₃] kommerziell vertrieben.

Für die Monomere der Gruppe a1) werden bevorzugt Acryl- und/oder Metacrylsäureester mit Alkylgruppen mit 4 bis 14 C-Atomen, bevorzugt mit 4 bis 9 C-Atomen eingesetzt, beispielsweise n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, die Methacrylsäurederivate der vorstehend genannten Verbindungen, verzweigte Isomere der vorstehend genannten Acryl- und Methacrylverbindungen (beispielsweise 2-Ethylhexylacrylat), sowie weiterhin Methylmethacrylate, Isobornylacrylat-und/oder-isobornylmethacrylate.

Für die Monomere der Gruppe a2) werden vorteilhaft beispielsweise Vinylester, Vinylether, Vinylhalogenide, Vinylidenhalogenide, Vinylverbindungen mit aromatischen Cyclen und Heterocyclen in a-Stellung eingesetzt, als Beispiele für vorstehende Gruppen seien Vinylacetat, Vinylformamid, Vinylpyridin, Ethylvinylether, Vinylchlorid, Vinylidenchlorid und/oder Acrylonitril genannt.
Weiterhin lassen sich für a2) bevorzugt Monomere mit Hydroxy-, Carboxy-, Epoxy-, Säureamid-, Isocyanato- und/oder Aminogruppen einsetzen.
Als Monomere der Gruppe a2) lassen sich weiterhin vorteilhaft Monomere wählen, welche neben einer polymerisierbaren Doppelbindung zumindest eine funktionelle Gruppe aufweisen, welche eine Vernetzungsreaktion zu fördern vermag und/oder eine H-Donor-Wirkung aufweist, beispielsweise Monomere in Form der allgemeinen Formel CH₂=CH(R₃)(COOR₄), wobei hier R₃ = H oder CH₃ ist und der Rest -OR₄ die besagte funktionelle Gruppe darstellt oder beinhaltet.

Sehr bevorzugte Beispiele für Monomere der Gruppe a2) sind weiterhin Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid, Glyceridylmethacrylat, Benzylmethacrylat, Phenylacrylat, Phenylmethacrylat, t-Butylphenylacrylat, t-Butylphenylmethacrylat, Phenoxyethylacrylat, Phenoxyethylmethacrylat, 2-Butoxyethylacrylat, 2-Butoxyethylmethacrylat, Dimethylaminoethylacrylat, Dimethylaminoethylmethacrylat, Dimethylaminomethylacrylat, Dimethylaminomethylmethacrylat, Cyanoethylacrylat, Cyanoethylmethacrylat, Glycerylmethacrylat, 6-Hydroxyhexylmethacrylat, n-tert-Butylacrylamid, N-Methylolacrylamid, N-Methylolmethacrylamid, N-(Buthoxy-methyl)methacrylamid, N-(Ethoxymethyl)acrylamid, N-Isopropylacrylamid, Vinylessigsäure, Tetrahydrofufurylacrylat, β-Acryloyloxypropionsäure, Tricloracrylsäure, Fumarsäure, Crotonsäure, Aconitsäure und/oder Dimethylacrylsäure, wobei diese Aufzählung nur beispielhaft und nicht abschließend ist.
In weiterer vorteilhafter Vorgehensweise werden als Monomere a2) aromatische Vinylverbindungen eingesetzt, wobei bevorzugt die aromatischen Kerne aus C₄- bis C₁₈-Bausteinen bestehen und auch Heteroatome enthalten können. Besonders bevorzugte Beispiele sind Styrol, 4-Vinylpyridin, N-Phenylphtalamid, Methylstyrol, 3,4-Dimethoxystyrol und/oder 4-Vinylbenzoesäure, wobei auch diese Aufzählung nur beispielhaft und nicht abschließend ist.

Zur Polymerisation werden die Monomere derart gewählt und zusammengesetzt, dass die resultierenden Polyacrylate als industriell verwendbare Haftklebemassen eingesetzt werden können, insbesondere derart, dass sie haftklebende Eigenschaften entsprechend des "Handbook of Pressure Sensitive Adhesive Technology" von Donatas Satas (van Nostrand, New York 1989) besitzen. Für diese Anwendungen liegt die statistische Glasübergangstemperatur des resultierenden Polyacrylats vorteilhaft unterhalb 25 °C (Glasübergangstemperaturen werden als Ergebnisse aus quasistatischen Verfahren wie z.B. Differential Scanning Calorimetry (DSC), konstante Aufheizrate 10 °C in 5 min, Schutzgasatmosphäre, angegeben).

Die Polymerisation kann nach einem an sich bekannten Verfahren oder in Abwandlung eines an sich bekannten Verfahrens durchgeführt werden, insbesondere durch konventionelle radikalische Polymerisation und/oder durch kontrollierte radikalische Polymerisation; letztere ist dabei durch die Anwesenheit geeigneter Kontrollreagenzien gekennzeichnet.

Die Polymerisation wird so geführt, dass die resultierenden Polymere bevorzugt mittlere Molekulargewichte Mₙ (Zahlenmittel) in einem Bereich von 50.000 bis 1.000.000 g/mol aufweisen, speziell für die weitere Verwendung als Schmelzhaftkleber werden Polymere mit mittleren Molekulargewichten Mₙ von 100.000 bis 800.000 g/mol bevorzugt. Die Bestimmung des mittleren Molekulargewichtes erfolgt über Größenausschlußchromatographie (Gelpermeationschromatographie, GPC) (Eluent: THF mit 0,1 Vol.-% Trifluoressigsäure; Messtemperatur 25 °C; Vorsäule: PSS-SDV, 5 µ, 10³ Å, ID 8,0 mm x 50 mm; Auftrennung: Säulen PSS-SDV, 5 µ, 10³ sowie 10⁵ und 10⁶ mit jeweils ID 8,0 mm x 300 mm; Probenkonzentration 4 g/l, Durchflußmenge 1,0 ml/min; Messung gegen Polystyrol-Standards) oder Matrix-unterstützte Laser-Desorption/lonisations-Massenspektrometrie (MALDI-MS).
Vorteilhaft weisen die Polymere eine enge Molekulargewichtsverteilung (Polydispersität D = M_{w}/Mₙ) auf, bevorzugt von D ≤ 3, sehr bevorzugt von D ≤ 2. Die Polydispersität wird ebenfalls über GPC (Messparameter wie oben) bestimmt.

Die Polymerisation kann in Substanz, in Gegenwart eines oder mehrerer organischer Lösungsmittel, in Gegenwart von Wasser und/oder in Gegenwart von Gemischen eines oder mehrerer Lösungsmittel mit Wasser durchgeführt werden. Es wird dabei angestrebt, die verwendete Lösungsmittelmenge möglichst gering zu halten. Als organische Lösungsmittel lassen sich vorteilhaft reine Alkane (Hexan, Heptan, Octan, lsooctan etc.), aromatische Kohlenwasserstoffe (Benzol, Toluol, Xylol etc.), Ester (Essigsäureethylester, essigsäurepropyl-, -butyl- und/oder -hexylester etc.), halogenierte Kohlenwasserstoffe (Chlorbenzol etc.), Alkanole (Methanol, Ethanol, Ethylenglycol, Ethylenglycol-monomethylether etc.) und/oder Ether (Diethylether, Dibutyleter etc.) einsetzen. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft lassen sich als Colösungsmittel aliphatische Alkohole, Glycole, Ether, Glycolether, Pyrrolidine, N-Alkylpyrrolidinone, N-Alkylpyrrolidone, Polyethylenglycole, Polypropylenglycole, Amide, Carbonsäuren sowie deren Hydride und/oder Salze, Ester, Organosulfide, Sulfoxide, Sulfone, Alkoholderivate, Hydroxyetherderivate, Aminoalkohole, Ketone und dergleichen, sowie Derivate der vorstehend genannten Verbindungen, einzeln oder im Gemisch miteinander einsetzen.

Die Polymerisationszeit beträgt - je nach Umsatz und Temperatur - vorteilhaft zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.
Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160°C, je nach Initiatortyp, initiiert werden.

Nach erfolgter Polymerisation werden die erhaltenen Polymere zu einer Schmelzhaftklebemasse (Polyacrylatschmelzhaftkleber) aufkonzentriert, deren Lösungsmittelgehalt ≤ 2 Gew.-%, besonders bevorzugt ≤ 0,5 Gew.-% ist. Dieser Prozess findet bevorzugt in einem Aufkonzentrationsextruder statt.

Für Naturkautschukklebemassen wird der Naturkautschuk bis zu einem frei wählbaren Molekulargewicht gemahlen und additiviert. Auch Elektronenstrahl- oder UV-vernetzbare Synthesekautschukklebemassen sind einsetzbar.
Bei Kautschuk/Synthesekautschuk als Ausgangsmaterial für die Schmelzhaftklebemasse sind weite Variationsmöglichkeiten gegeben. Als Basis für die Schmelzhaftklebemasse dienen vorteilhaft Naturkautschuke oder Synthesekautschuke oder beliebige Blends aus Naturkautschuken und/oder Synthesekautschuken, wobei der oder die Naturkautschuke grundsätzlich aus allen erhältlichen Qualitäten wie zum Beispiel Crepe-, RSS-, ADS-, TSR- und/oder CV-Typen, je nach benötigtem Reinheits- und Viskositätsniveau, und der oder die Synthesekautschuke aus der Gruppe der statistisch copolymerisierten StyrolButadien-Kautschuke (SBR), der Butadien-Kautschuke (BR), der synthetischen Polyisoprene (IR), der Butylkautschuke (IIR), der halogenierten Butylkautschuke (XIIR), der Acrylatkautschuke (ACM), der Ethylen-Vinylacetat-Copolymeren (EVA) und der Polyurethane und/oder deren Blends gewählt werden können.
Weiterhin können Kautschuken vorzugsweise zur Verbesserung der Verarbeitbarkeit thermoplastische Elastomere, bevorzugt mit einem Gewichtsanteil von 10 bis 50 Gew.-%, bezogen auf den Gesamtelastomeranteil, zugesetzt werden. Stellvertretend genannt seien vor allem die besonders verträlichen Styrol-Isopren-Styrol- (SIS) und Styrol-Butadien-Styrol-(SBS) -Typen.

Vorteilhaft werden die Acrylat-, Natur- bzw. Synthesekautschuk- oder anderweitigen Haftklebemassen mit zumindest einem Harz abgemischt.

Als klebrigmachende Harze lassen sich alle vorbekannten und in der Literatur beschriebenen Klebharze einsetzen, wenn sie eine zumindest teilweise Verträglichkeit (Mischbarkeit) mit der Haftklebemasse aufweisen. Genannt seine stellvertretend die Pinen-, Inden-und Kolophoniumharze, deren disproportionierte, hydrierte, polymerisierte und/oder veresterte Derivate und/oder Salze, die aliphatischen und aromatischen Kohlenwasserstoffharze, Terpenharze und Terphenolharze sowie C5-, C9- sowie andere Kohlenwasserstoffharze.
Die Harze können einzeln, in Kombination miteinander oder auch mit weiteren Harzen eingesetzt werden. Die Menge und Art der zugemischten Harze kann sich dabei nach den gewünschten Eigenschaften der resultierenden Haftklebemasse richten. Auf die Darstellung des Wissensstandes im "Handbook of Pressure Sensitive Adhesive Technology" von Donatas Satas (van Nostrand, 1989) sei ausdrücklich verwiesen.
Weiterhin können den Schmelzhaftklebemassen ein oder mehrere weitere Additive zugesetzt werden, wie Alterungsschutzmittel, Lichtschutzmittel, Ozonschutzmittel, Fettsäuren, Weichmacher, Keimbildner und/oder Beschleuniger, weiterhin ein oder mehrere Füllstoffe wie Fasern, Ruß, Zinkoxid, Titandioxid, Mikrovollkugeln, Kieselsäure, Silikate, Kreide und/oder blockierungsfreie Isocyanate.
Als weiterhin zuzusetzende Weichmacher können alle aus der Klebebandtechnologie bekannten weichmachenden Substanzen eingesetzt werden. Dazu zählen unter anderem die paraffinischen und naphthenischen Öle, (ggf. funktionalisierte) Oligomere wie Oligobutadiene und/oder Oligoisoprene, flüssige Nitrilkautschuke, flüssige Terpenharze, pflanzliche und tierische Öle und Fette, Phthalate, funktionalisierte Acrylate.

Für eine eventuelle UV-Vernetzung können die Haftklebemassen vorteilhaft mit Photoinitiatoren abgemischt werden. Hierfür eignen sich bevorzugt Norrish-Typ I - und -Typ II - Spalter, wobei einige Beispiele für beide Klassen durch Benzophenon-, Acetophenon-, Benzil-, Benzoin-, Hydroxyalkylphenon-, Phenylcyclohexylketon-, Anthrachinon-, Thioxanthon-, Triazin- und/oder Fluorenonderivate gegeben sind, wobei diese Aufzählung nicht abschließend gemeint ist. Ein Überblick wird in "Photoinitiation Photopolymerization and Photocuring, Fundamentals and Applications" von J.-P. Fouassier (Hanser Publishers, München, Wien, New York, 1995) und in "Chemistry and Technology of UV & EB Formulation for Coatings, Inks and Paints", Volume 5 von A. Carroy, C. Decker, J.P. Dowling, P. Pappas; B. Monroe (ed. by P.K.T. Oldring, publ. by SITA Technology, London, 1994) gegeben.

Die derart vorbereiteten Schmelzhaftkleber werden in dem erfindungsgemäßen Verfahren als Heißschmelzmasse aufgeschäumt. Zur Erzielung eines Schaums wird vorteilhaft ein beliebiges Gas oder Gasgemisch, vorzugsweise Stickstoff, Luft, Kohlendioxid, Kohlenwasserstoffe und/oder Edelgase, eingesetzt. In einer bevorzugten Variante werden inerte Gase verwendet. In manchen Fällen kann sich auch ein Schäumen durch thermische Zersetzung gasentwickelnder Substanzen wie Azo-, Carbonat- und/oder Hydrazid-Verbindungen als geeignet erweisen.
Der Schäumungsgrad, das heißt der Gasanteil, sollte mindestens etwa 10 Vol.-% betragen und kann bis zu etwa 80 % reichen. In der Praxis haben sich Werte von 30 bis 70 %, bevorzugt von etwa 50 % Gasanteil gut bewährt.
Je nach dem jeweiligen Anwendungsbereich der Haftklebemasse können offenporige oder geschlossenporige Schäume vorteilhaft sein, auch Systeme mit sowohl offenen als geschlossenen Poren lassen sich realisieren. Wird bei relativ hohen Temperaturen von größer 100 °C und vergleichsweise hohem Innendruck gearbeitet, entstehen offenporige Haftklebestoffschäume. Durch Variation der Parameter wie z.B. durch Reduktion des Druckes lassen sich auch geschlossenporige Schaumstrukturen erzeugen und verwenden.
Ein besonders geeignetes Verfahren zur Herstellung der Haftklebeschäume arbeitet nach dem sogenannten Schaum-Mix-System. Hier wird der Haftkleber unter hohem Druck bei ca. 120 °C mit trockenen Gasen wie z.B. Stickstoff, Luft oder Kohlendioxid in unterschiedlichen Volumenanteilen (etwa 10 bis 80 %) in einem Stator/Rotorsystem umgesetzt. Während der Gasvordruck größer als 100 bar ist, betragen die Mischdrucke Gas/Haftklebemasse im System 40 bis 100 bar, bevorzugt 40 bis 70 bar. Der so unter Druck gesetzte Haftkleber schäumt nach dem Austritt aus einer Düse auf.
Prinzipiell können Haftklebeschäume mit unterschiedlichen Strukturen und physikalischen Eigenschaften (u.a. Dichten) hergestellt werden. Als besonders vorteilhaft haben sich Schäume mit einer Dichte von etwa 2 bis 500 kg/m³, sehr bevorzugt von 20 bis 200 kg/m³ herausgestellt.

Der Haftklebeschaum wird zur Vernetzung und Stabilisierung direkt nach der Aufschäumung und dem Austritt aus der Düse - wobei die beiden vorgenannten Schritte auch zeitgleich erfolgen können - auf eine Walze der zuvor beschriebenen Art, insbesondere eine mit einem Kontaktmedium versehenen Kühlwalze geführt Bevorzugt wird auf unter 5 °C gekühltes Wasser verwendet, dessen Wirksamkeit durch Zusatz der oben beschriebenen Additive verbessert werden kann. Der Kontaktflüssigkeitsfilm auf der Walze gleicht dabei Unebenheiten der Walzenoberfläche und des Haftklebeschaums aus und vermeidet so Hohlräume in diesem Bereich.
Durch die Beschichtung aus der Düse weisen die Haftklebeschäume für gewöhnlich ein Rückstellvermögen auf. Dabei zieht sich der Haftklebeschaum beispielsweise nach dem Austritt aus der Düse zusammen. Um dieses zu vermeiden, ist es vorteilhaft, die Breite der Beschichtungsdüse zu variieren und dem gewünschten Ergebnis anzupassen. So kann zum Beispiel die Düsenbreite deutlich oberhalb der Breite der beschichteten Haftklebemassenschicht gewählt werden.

Eine Weiterentwicklung des erfindungsgemäßen Verfahrens sieht vor, den Haftklebemassenschaum nach der Vernetzung auf ein Trägermaterial (PP, BOPP, PET, Vlies, PVC, Polyester, Trägerschäume oder dergleichen) oder auf Trennpapier (Glassine, HDPE, LDPE oder dergleichen) direkt aufzutragen, umzulaminieren oder umzukaschieren.

Eine Weiterentwicklung des erfindungsgemäßen Verfahrens zeichnet sich dadurch aus, dass sich orientierte Haftklebeschäume herstellen lassen. Hierfür werden in einer bevorzugten Variante des Verfahrens Haftklebemassen mit einem hohen Molekulargewicht entsprechend des erfindungsgemäßen Verfahrens geschäumt und beschichtet. Durch geeignete Geometrie der Düse sowie der Reckung auf eine geringe Schichtdicke lässt sich eine Orientierung des Haftklebeschaums erzielen, die durch direkte Abkühlung und sofortige Vernetzung mit actinischer Strahlung (Elektronenstrahlen, UV-Licht und dergleichen) eingefroren wird. Die Vernetzung findet dabei ebenfalls auf der Kühlwalze statt. Solche Haftklebeschäume weisen ein anisotropes Verhalten auf, welches insbesondere die Zug-Dehn-Charakteristik des Haftklebeschaumes beeinflusst.

Bei dieser Verfahrensweise wird bevorzugt die Schmelzhaftklebemasse während und/oder nach der Schäumung durch eine Extrusionsdüse gepresst, wobei eine Reckung stattfindet, und die derart geschäumte und gereckte Schmelzhaftkfebemasse auf die kühlbare Walze aufgelegt wird.
Das Auflegen auf die Walze erfolgt vorteilhaft unmittelbar nach dem Durchpressen durch die Düse, also als Extrusionsbeschichtung.
Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Zur Herstellung von orientierten Acrylathaftklebemassen wird besonders bevorzugt mit einer Bügeldüse beschichtet, und zwar derart, dass durch eine Relativbewegung von Düse zu der zu beschichtenden Oberfläche, vorteilhaft also zur Walzenoberfläche, eine Polymerschicht auf der Oberfläche entsteht. Durch die Ausformung des Acrylathotmelts in der Bügel-Düse sowie den Austritt aus der Düse mit einer bestimmten Filmdicke, durch die Reckung des Haftklebemassenfilms auf eine dünnere Filmdicke beim Übertrag auf die Oberfläche und durch die anschließende Vernetzung auf der Walze wird die Orientierung erhalten.
Die Zeitdauer zwischen der Beschichtung und der Vernetzung ist in günstiger Weise sehr gering, bevorzugt nicht größer als 10 s.

Die nach dem erfindungsgemäßen Verfahren hergestellten Haftklebeschäume lassen sich als Haftklebemassen hervorragend überall dort verwenden, wo bisher "konventionelle" Haftklebemassen zum Einsatz kommen, bieten jedoch verbesserte Haftklebeeigenschaften, wie z.B. ein sehr gutes Auffließverhalten und somit eine deutlich höhere Haftklebrigkeit. Weiterhin können die Haftklebeschäume Unebenheiten ausgleichen. So können solche Haftklebeschäume vorteilhaft insbesondere für Klebebänder verwendet werden, wobei die Haftklebemasse ein- oder beidseitig auf einem Träger aufgetragen sein kann.

### Beschreibung der durchgeführten Versuche

### Herstellung der Acrylathaftklebemasse 1

Ein für radikalische Polymerisationen konventioneller 200 L-Reaktor wurde mit 2,4 kg Acrylsäure, 3,2 kg N-tert.-Butylacrylamid, 4,0 kg Methylacrylat, 30,4 kg 2-Ethylhexylacrylat und 30 kg Aceton/Isopropanol (97:3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden erneut 20 g AlBN hinzugegeben. Die Reaktion wurde nach 48 h Reaktionszeit abgebrochen und der Ansatz auf Raumtemperatur abgekühlt. Anschließend wurde die Haftklebemasse unter Erwärmung sowie Anlegen eines Vakuums vom Lösemittel befreit Der Restlösemittelanteil lag bei < 0,5 %.

### Herstellung der Acrylathaftklebemasse 2

Ein für radikalische Polymerisationen konventioneller 200 L-Reaktor wurde mit 3,6 kg Acrylsäure, 36,4 kg 2-Ethylhexylacrylat und 30 kg Aceton/Isopropanol (97:3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden erneut 20 g AIBN hinzugegeben. Die Reaktion wurde nach 48 h Reaktionszeit abgebrochen und auf Raumtemperatur abgekühlt. Anschließend wurde die Haftklebemasse unter Erwärmung sowie Anlegen eines Vakuums vom Lösemittel befreit. Der Restlösemittelanteil lag bei < 0,5 %.

### Beschichtung

Die Acrylathotmeits wurden mit Hilfe eines Einschneckenextruders (UD : 27) gefördert. Es wurde nach dem oben beschriebenen Schaum-Mix-Verfahren bei 120 °C aufgeschäumt, wobei im Verhältnis von 1:2 (Verhältnis von Haftklebemasse zu Stickstoff) mit Stickstoff geschäumt wurde. Der daraus resultierende Gasanteil im Haftklebeschaum beträgt 50 %. Der Haftkleber wurde mit Stickstoff in einem Stator/Rotorsystem umgesetzt. Der Gasvordruck betrug größer 100 bar. Die Mischdrucke Gas/Haftklebemasse lagen zwischen bei ca. 60 bar. Es wurde mittels einer Monoextrusionsdüse auf eine Kühlwalze berührungsfrei beschichtet. Die Schaumbildung trat beim Austritt aus der Düse auf. Nach der Elektronenbestrahlung erfolgte die Transferierung über die bahnführende Anlegewalze auf eine 12 pm Corona-behandelte PET-Folie.

### Elektronenbestrahlung

Die Elektronenbestrahlung erfolgte mit einem Gerät der Fa. Electron Crosslinking AB, Halmstad, Schweden. Der zu bestrahlende Haftklebeschaum wurde dabei über eine Kühlwalze unter dem Lenard-Fenster des Beschleunigers hindurch geführt Dabei wurde in der Bestrahlungszone der Luftsauerstoff durch Spülen mit reinem Stickstoff verdrängt Die Bahngeschwindigkeit betrug 10 m/min. Es wurde bei einer Beschleunigungsspannung von 180 kV mit 40 kGy vernetzt. Für das bestrahlte Material wurde die Kühlwalze durch eine Spezialwalze mit benetzbarer Oberflächenbeschichtung versehen. Die Kontaktftüssigkeit (Wasser mit 5 % n-Butanol) wurde mit einem Antragswerk angebracht Die Dicke des Flüssigkeitsfilms betrug dabei etwa 0,01 bis 0,5 mm.

## Patentansprüche

1. Verfahren zur Herstellung einer Haftklebemasse, bei welchem zunächst eine Schmelzhaftklebemasse nach einem an sich bekannten Verfahren hergestellt wird,
**dadurch gekennzeichnet, dass**
- die Schmelzhaftklebemasse geschäumt wird,
- der geschäumte Schmelzhaftkleber auf eine kühlbare Walze aufgelegt wird und
- auf der kühlbaren Walze durch Bestrahlung mit actinischer Strahlung vernetzt wird.

2. Verfahren nach Anspruch 1, **dadurch gekennzeichnet, dass**
der vernetzte Haftklebeschaum auf ein Trägermaterial und/oder eine weitere Haftklebeschicht transferiert wird.

3. Verfahren nach zumindest einem der vorangehenden Ansprüche, **dadurch gekennzeichnet, dass**
es sich bei der Schmelzhaftklebemasse um eine solche auf Acrylat-, Methacrylat-, Naturkautschuk-, Synthesekautschuk- oder EVA-Basis handelt.

4. Verfahren nach zumindest einem der vorangehenden Ansprüche, **dadurch gekennzeichnet, dass**
die Temperatur der Walze während der Bestrahlung der Schmelzhaftklebemasse nicht mehr als 25 °C beträgt.

5. Verfahren nach Anspruch 4, **dadurch gekennzeichnet, dass**
die Walze aktiv gekühlt wird.

6. Verfahren nach zumindest einem der vorangehenden Ansprüche, **dadurch gekennzeichnet, dass**
sich während der Bestrahlung der Schmelzhaftklebemasse zwischen dieser und der Walze ein Kontaktmedium befindet

7. Verfahren nach zumindest einem der vorangehenden Ansprüche, **dadurch gekennzeichnet, dass**
zur Schäumung der Schmelzhaftklebemasse ein Gas oder ein Gasgemisch verwendet wird, insbesondere Luft, Stickstoff, Kohlendioxid, gasförmige Kohlenwasserstoffe, Edelgase.

8. Verfahren nach zumindest einem der vorangehenden Ansprüche, **dadurch gekennzeichnet, dass**
die Schäumung der Schmelzhaftklebemasse durch Zersetzung gasentwickelnder Substanzen erzielt wird, insbesondere durch thermische Zersetzung.

9. Verfahren nach zumindest einem der vorangehenden Ansprüche, **dadurch gekennzeichnet, dass**
als gasentwickelnde Substanzen Azo-, Carbonat- und/oder Hydrazid-Verbindungen eingesetzt werden.

10. Verfahren nach zumindest einem der vorangehenden Ansprüche, **dadurch gekennzeichnet, dass**
die Schmelzhaftklebemasse während und/oder nach der Schäumung durch eine Extrusionsdüse gepresst wird, bevorzugt durch eine Bügeldüse, wobei eine Reckung stattfindet, und die derart geschäumte und gereckte Schmelzhaftklebemasse auf die kühlbare Walze aufgelegt wird.

## Claims

1. Process for preparing a pressure-sensitive adhesive, wherein first of all a hotmelt pressure-sensitive adhesive is prepared by a method known per se, **characterized in that**
- the hotmelt pressure-sensitive adhesive is foamed,
- the foamed hotmelt pressure-sensitive adhesive is placed onto a coolable roll, and
- crosslinking takes place on the coolable roll by exposure to actinic radiation.

2. Process according to Claim 1, **characterized in that** the crosslinked pressure-sensitive adhesive foam is transferred to a backing material and/or to a further pressure-sensitive adhesive layer.

3. Process according to at least one of the preceding claims, **characterized in that** the hotmelt pressure-sensitive adhesive is based on acrylate, methacrylate, natural rubber, synthetic rubber or EVA.

4. Process according to at least one of the preceding claims, **characterized in that** the temperature of the roll during irradiation of the hotmelt pressure-sensitive adhesive is not more than 25°C.

5. Process according to Claim 4, **characterized in that** the roll is actively cooled.

6. Process according to at least one of the preceding claims, **characterized in that** during the irradiation of the hotmelt pressure-sensitive adhesive there is contact medium between the adhesive and the roll.

7. Process according to at least one of the preceding claims, **characterized in that** the hotmelt pressure-sensitive adhesive is foamed using a gas or gas mixture, in particular air, nitrogen, carbon dioxide, gaseous hydrocarbons, noble gases.

8. Process according to at least one of the preceding claims, **characterized in that** the foaming of the hotmelt pressure-sensitive adhesive is achieved by decomposition of gas-evolving substances, in particular by thermal decomposition.

9. Process according to at least one of the preceding claims, **characterized in that** azo, carbonate and/or hydrazide compounds are used as gas-evolving substances.

10. Process according to at least one of the preceding claims, **characterized in that** during and/or after foaming, the hotmelt pressure-sensitive adhesive is pressed through an extrusion die, preferably through a coathanger die, with stretching taking place, and the hotmelt pressure-sensitive adhesive, thus foamed and stretched, is placed onto the coolable roll.

## Revendications

1. Procédé de fabrication d'une masse autoadhésive dans lequel une masse autoadhésive thermofusible est initialement fabriquée selon un procédé connu en lui-même, **caractérisé en ce que** :
- la masse thermofusible autoadhésive est expansée,
- la colle thermofusible autoadhésive expansée est disposée sur un cylindre pouvant être refroidi, et
- est réticulée sur le cylindre pouvant être refroidi par exposition à un rayonnement actinique.

2. Procédé selon la revendication 1, **caractérisé en ce que** la mousse autoadhésive réticulée est transférée sur un matériau support et/ou une autre couche autoadhésive.

3. Procédé selon l'une quelconque des revendications précédentes, **caractérisé en ce que** la masse thermofusible autoadhésive est à base d'acrylate, de méthacrylate, de caoutchouc naturel, de caoutchouc de synthèse, ou d'EVA.

4. Procédé selon l'une quelconque des revendications précédentes, **caractérisé en ce que** la température du cylindre pendant l'exposition de la masse thermofusible autoadhésive au rayonnement ne dépasse pas 25°C.

5. Procédé selon la revendication 4, **caractérisé en ce que** le cylindre est refroidi activement.

6. Procédé selon l'une quelconque des revendications précédentes, **caractérisé en ce qu'**un milieu de contact est présent entre la masse thermofusible autoadhésive et le cylindre pendant l'exposition de celle-ci au rayonnement.

7. Procédé selon l'une quelconque des revendications précédentes, **caractérisé en ce qu'**un gaz ou un mélange gazeux est utilisé pour l'expansion de la masse thermofusible autoadhésive, en particulier de l'air, de l'azote, du dioxyde de carbone, des hydrocarbures sous forme gazeuse, des gaz rares.

8. Procédé selon l'une quelconque des revendications précédentes, **caractérisé en ce que** l'expansion de la masse thermofusible autoadhésive est obtenue par dégradation de substances génératrices de gaz, en particulier par dégradation thermique.

9. Procédé selon l'une quelconque des revendications précédentes, **caractérisé en ce que** des liaisons azo, carbonate, et/ou hydrazide sont utilisées en tant que substances génératrices de gaz.

10. Procédé selon l'une quelconque des revendications précédentes, **caractérisé en ce que** la masse thermofusible autoadhésive se trouve comprimée à travers une filière d'extrusion, de préférence à travers un gicleur/asperseur à étrier, pendant et/ou après l'expansion, de sorte qu'un étirage intervient et que la masse thermofusible autoadhésive étirée est déposée sur le cylindre pouvant être refroidi.
